Europäisches Patentamt

European Patent Office

Office européen des brevets

(11) Publication number: **0 535 744 A2**

## EUROPEAN PATENT APPLICATION

(21) Application number: **92202968.1**

(22) Date of filing: **26.09.92**

(51) Int. Cl.5: **C08L 67/02**, //(C08L67/02, 23:06,23:08),(C08L67/02,23:06, 33:06)

(30) Priority: **30.09.91 IT MI912589**

(43) Date of publication of application: **07.04.93 Bulletin 93/14**

(84) Designated Contracting States: **AT BE CH DE DK ES FR GB GR IE IT LI LU MC NL PT SE**

(71) Applicant: **ISTITUTO GUIDO DONEGANI S.p.A.**
**4, Via Fauser**
**I-28100 Novara(IT)**

(72) Inventor: **Penco, Maurizio**

Via Leopardi, 5
**I-20073 Codogno (Milan)(IT)**
Inventor: **Pastorino, Maria**
**Via Casaregis 30/12**
**I-16129 Genova(IT)**
Inventor: **Giannotta, Giorgio**
**Via Pola 21**
**I-20100 Milan(IT)**

(74) Representative: **Roggero, Sergio et al**
**Ing. Barzanò & Zanardo Milano S.p.A. Via Borgonuovo 10**
**I-20121 Milano (IT)**

(54) **Polyester based high-tenacity, high-impact thermoplastic compositions.**

(57) Thermoplastic compositions comprising:
(a) from 60 to 90% by weight, as referred to total polymeric components, of at least one aromatic polyester;
(b) from 5 to 25% by weight, as referred to total polymeric components, of polyethylene;
(c) from 5 to 35% by weight, as referred to total polymeric components, of at least one elastomeric copolymer constituted by 45% to 90%, by mol, of ethylene, 5-50%, by mol, of an alkyl acrylate or alkyl methacrylate in which the alkyl group contains from 1 to 8 carbon atoms, from 0.3 to 5%, by mol, of an unsaturated epoxide;
(d) from 0.01 to 2% by weight, relatively to the total weight of the composition, of a free-radical initiator;
with the total of the percentage contents of (a), (b) and (c) components being 100.

Fig.1

The present invention relates to thermoplastic compositions based on aromatic polyesters in mixture with polyethylene and an elastomer functionalized with epoxy groups, displaying high values of tenacity and impact strength.

The development of polymeric composition based on aromatic polyesters, and, in particular, based on poly-(ethylene terephthalate) (PET), displaying high values of tenacity and impact strength, is considerably important, because it would make it possible recycled products of industrial type (i.e., processing scraps) and of civil type (packaging materials) to be used in the manufacture of materials suitable for applications of semi-structural type, e.g., in automotive sector, or in the sector of household appliances.

It is well-known that the thermoplastic polyesters, such as poly-(ethylene terephthalate) (PET) and poly-(butylene terephthalate) (PBT), are polymers which, in their pristine state, show an extremely low impact strength.

It is well-known as well that the tenacity of materials based on thermoplastic polyesters can be increased by blending With a wide range of elastomers. For that purpose, elastomeric systems are used, e.g., which are based on ethylene copolymers with alkyl acrylates or alkyl methacrylates, functionalized with anhydride moieties (JP patent application 62167351) or epoxy moieties (EP-341 731 and WO-85/03718 patent applications).

Attempts aiming at further improving the technological characteristics of such materials were carried out by blending the aromatic polyesters, in the molten state, simultaneously with two elastomeric ethylene copolymers and with alkyl (meth)acrylates, respectively containing epoxy and anhydride functionalities (see M. Hert, J.C. Jannel and P. Robert, The Sixth Annual Meeting, PPS, April 17-20, 1990 Nice, France; and WO-89/05838 and EP-342 067 patent applications).

As regards the compositions constituted by aromatic polyesters and polyethylene, the simple blending thereof, in the absence of compatibilizing agents, leads to materials displaying considerable de-mixing (i.e., phase separation) phenomena, due to the high mutual incompatibility of the components.

The PET/polyethylene-containing compositions known from the prior art generally display rather poor values of impact strength, even when elastomeric systems, such as styrene-ethylene-butene-styrene (SEBS) systems, ethylene-propylene-diene (EPDM) rubbers, ethylene-vinyl acetate rubbers are used as compatibilizer agents (see: In-Mau Chen and Chii-Ming Shiah, Plastics Engineering, October 1989, 33-35; and GB patent 2 122 627).

The present Applicant has surprisingly found now that thermoplastic compositions based on aromatic polyesters, endowed with high values of tenacity and impact strength, can be obtained by blending said polyester With polyethylene and with an ethylene/alkyl (meth)acrylate elastomeric copolymer functionalized with epoxy groups, in the presence of a free-radical initiator.

Therefore, the object of the present invention are the thermoplastic compositions comprising:

(a) from 60 to 90% by weight, as referred to total polymeric components, of at least one aromatic polyester;

(b) from 5 to 25% by weight, as referred to total polymeric components, of polyethylene;

(c) from 5 to 35% by weight, as referred to total polymeric components, of at least one elastomeric copolymer constituted by 45% to 90%, by mol, of ethylene, 5-50%, by mol, of an alkyl acrylate or alkyl methacrylate in which the alkyl group contains from 1 to 8 carbon atoms, and from 0.3 to 5%, by mol, of an unsaturated epoxide;

(d) from 0.01 to 2% by weight, relatively to the total weight of the composition, of a free-radical initiator;

with the total of the percentage contents of (a), (b) and (c) components being 100.

According to a preferred form of practical embodiment, the (a) component is present in amounts comprised within the range of from 60 to 80%, the (b) component is present in amounts comprised within the range of from 5 to 15%, the (c) component is present in amounts comprised within the range of from 15 to 30%, with said percentages being expressed as % by weight relatively to the total polymeric components, and the (d) component is preferably present in amounts comprised within the range of from 0.01 to 0.5% by weight, relatively to the total weight of the composition.

The aromatic polyesters which make up part of the compositions according to the present invention are selected from the products of condensation of at least one saturated glycol and at least one aromatic dicarboxy acid, or a derivative thereof. Among the saturated glycols, those containing from 2 to 10 carbon atoms, such as, e.g., ethylene glycol, propane-1,3-diol, butane-1,4-diol, pentane-1,5-diol, and 2,2-dimethyl-propane1,3-diol are preferred. From aromatic dicarboxy acids, those of from 8 to 14 carbon atoms are generally preferred, such as, e.g., terephthalic acid, phthalic acid, isophthalic acid, 2,6-naphthalenedicarboxy acid, 4,4'-diphenyldicarboxy acid.

Particularly preferred polyesters are poly-(ethylene terephthalate) (PET) and poly-(1,4-butylene terephthalate) (PBT), as well as their mixtures, or products of polycondensation of terephthalic acid and a mixture of ethylene and butylene glycols. Of them, poly-(ethylene terephthalate) is still more preferred.

For the purposes of the present invention, particularly advantageous is using a PET grade with an inherent viscosity comprised within the range of from 0.6 to 0.8 dl/g (as measured at 25°C in chlorophenol).

Among the various polyethylene types, high-density polyethylenes (HDPE) can be used, among which particularly preferred are those having a melt flow index (MFI) comprised within the range of from 10 to 30 g/10 minutes, as measured at 190°C under a load of 2.16 kg/cm$^2$ (ASTM D-1238).

The ethylene/alkyl (meth)acrylate elastomeric copolymers containing an unsaturated epoxide used as the (c) component in the compositions according to the present invention are widely described in the prior art (see, e.g., M. Hert, J.C. Jannel and P. Robert, The Sixth Annual Meeting, PPS, April 17-20, 1990, Nice, France; and J.F. Hagman, J.W. Crary, Encyclopedia of Polymer Sci. and Eng., Vol. 1, pages 325-334, 1985).

From them, those constituted by 70-85%, by mol, of ethylene, 10-25%, by mol, of a (meth)acrylate in which the alkyl group is $(C_1-C_8)$-alkyl and 2-5%, by mol, of unsaturated epoxide, are preferred.

Among the unsaturated epoxides which can make up part of such elastomeric copolymers, the following may be recalled herein:

-- aliphatic or aromatic glycidyl esters and glycidyl ethers, such as: glycidyl acrylate, glycicyl methacrylate, allyl-glycidyl-ether, vinyl-glycidyl-ether, glycidyl maleate, glycidyl itaconate, the monoester of diglycidyl-bisphenol-A with acrylic or methacrylic acid;

-- alicyclic glycidyl esters and glycidyl ethers, such as: 2-cyclohexene-1-glycidyl ether, cyclohexene-4,5-diglycidyl carboxylate, cyclohexene-4-glycidyl carboxylate, 5-norbornene-2-methyl-2-glycidyl carboxylate, endo-cis-bicyclo(2,2,1)-5-heptene-2,3-diglycidyl dicarboxylate.

Particularly preferred are glycidyl acrylate and glycidyl methacrylate.

Among the alkyl (meth)acrylates which can be used as comonomers in the (c) component, those compounds are particularly preferred in which the alkyl group is a $(C_1-C_4)$-alkyl, such as: methyl methacrylate, ethyl acrylate, n-butyl acrylate, isobutyl acrylate, methyl acrylate, and so forth.

The free-radical initiators useable in the compositions according to the present invention are those which are commonly used in the grafting and/or polymerization reactions of radicalic type. Within this class of initiators, those initiators showing a dissociation constant at 80°C lower than $5 \times 10^{-5}$ seconds$^{-1}$, are preferred.

Within that class of compounds the organic peroxides fall, such as, e.g.: benzoyl peroxide, di-tert.-butyl peroxide, dicumyl-peroxide, tert.-butyl perbenzoate, tert.-butyl 2-ethylhexanoate, cumene hydroperoxide. Also mixtures of different organic peroxides can be used.

Those initiators which contain the azoic group, or carbene generators, can be used as well.

The components can be blended by means of any one of the methods known from the prior art. According to a preferred form of practical embodiment, said blending is carried out by extruding all components together with one another, in the molten state, and in one single step.

The thermoplastic compositions according to the present invention can optionally additionally contain additives and/or auxiliaries well-known in the art, such as mineral fillers, fibrous reinforcer materials, nucleating agents, stabilizer and flame retardant agents, and so forth.

As already mentioned hereinabove, the thermoplastic compositions according to the present invention display a considerable increase in impact strenght and tenacity, over the same type of compositions known from the prior art, and therefore find their use in all those industrial fields in which, beside the typical mechanical properties of the thermoplastic polyesters, such as high values of modulus and load at breakage, very good impact strength properties are required. Such properties are required, e.g., in the production of semi-structural parts for automotive sector, such as bumpers, side panels, doors, and so forth.

Some examples of practical embodiment of the present invention are reported now for merely illustrative purposes, and which in no way shall be construed as being limitative of the purview of the same invention.

All of the preparations disclosed in the samples were performed with the aid of a co-rotating twin-screw extruder (Werner) equipped with a gravimetric metering system (operating under an inert blanketing atmosphere) and with a feed system for liquid substances, so configured as to be equipped with two feed zones for solid substances: i.e., a main feed zone (Feed Zone 1) and a feed zone, still for solid substances, approximately positioned at half-machine length (Feed Zone 2).

In all tests, the following temperature profile was used:

Table 1

| Zone No. | 1 | 2 | 3 | 4 | 5 | 6 | Head |
|---|---|---|---|---|---|---|---|
| Temperature (°C) | 260 | 260 | 265 | 270 | 275 | 280 | 280 |

Examples 1-4 (Comparison Example)

To an extruder having the characteristics disclosed hereinabove, the following compounds are fed to the Feed Zone 1:

-- PET (inherent viscosity: 0.74 dl/g, as measured at 25°C in chlorophenol), admixed with 0.3% of talc, 0.2% of sodium benzoate, 0.20% of Anox[(R)] 20 and 0.3% of Alkonox[(R)] 240 (all said percent values being percentage contents by weight, based on PET);

-- High-density polyethylene (HDPE), having MFI = 25 g/10 minutes, as measured at 190°C under a load of 2.16 kg/cm$^2$;

To the Feed Zone 2, the remaining PET, containing the above-said additives, is fed.

The operating parameters of the extruder are as follows:

| | |
|---|---|
| -- total throughput | 40 kg/hour; |
| -- Revolution speed | 200 revolutions/minute; |
| -- Molten mass temperature | 282°C; |
| -- Head pressure | 10-12 bars |

The amounts of the several components fed to both Feed Zones 1 and 2 are reported in following Table II, in which the percentage values reported are expressed as % by weight, and are based on the total amount of fed polymeric components.

Table II

| | Feed Zone 1 | | Feed Zone 2 |
|---|---|---|---|
| Example | PET % | HDPE % | PET % |
| 1 | 55 | 5 | 40 |
| 2 | 45 | 15 | 40 |
| 3 | 40 | 20 | 40 |
| 4 | 35 | 25 | 40 |

The data of IZOD impact strength (ASTM D-256) and bending modulus (ASTM D-790) are reported in following Table IV.

Examples 5-10

According to the same modalities as disclosed for Examples 1-4, a composition is prepared, which comprises:

-- PET (inherent viscosity: 0.74/dl as measured at 25°C in chlorophenol), admixed with 0.3% of talc, 0.2% of sodium benzoate, 0.20% of Anox[(R)] 20 and 0.3% of Alkonox[(R)] 240 (all percent values being percent contents by weight, based on PET);

-- An elastomer having the following monomeric composition, expressed as % by mol:

| | |
|---|---|
| - ethylene | 83% |
| - ethyl acrylate | 14% |
| - glycidyl methacrylate | 3% |

having $T_g$ = -40°C and $\eta$ = 600 Pa.sec (at $\dot{\gamma}$ = 100 sec$^{-1}$ and T = 270°C);

4

-- A high-density polyethylene (HDPE), having MFI = 25 g/ 10 minutes, as measured at 190°C under a load of 2.16 kg/cm$^2$, mixed with 0.2% by weight of dicumyl-peroxide, based on HDPE.

The amounts of the various components fed to both feed zones are reported in following Table III, in which the percentage values are expressed by weight, and are referred to the total amount of fed polymeric components.

Table III

| Example | FEED ZONE 1 | | FEED ZONE 2 | |
|---|---|---|---|---|
| | PET % | ELASTOMER % | HDPE + DCP % | PET % |
| 5 | 37.5 | 22.5 | 7.5 | 32.5 |
| 6 | 40 | 20 | 10 | 30 |
| 7 | 42.5 | 17.5 | 12.5 | 27.5 |
| 8 | 45 | 15 | 15 | 25 |
| 9 | 50 | 10 | 20 | 20 |
| 10 | 52.5 | 7.5 | 22.5 | 17.5 |

The data of IZOD impact strength and bending modulus are reported in following Table IV. In said Table IV, the amounts of DCP are reported as % by weight, based on total composition weight.

Table IV

| Example | PET (% by weight) | HDPE (% by weight) | Elastomer (% by weight) | DCP (% by weight) | Izod Impact strength (J/m) | Bending Modulus (MPa) |
|---|---|---|---|---|---|---|
| 1 | 95 | 5 | -- | -- | 37 | 3005 |
| 2 | 85 | 15 | -- | -- | 34 | 2922 |
| 3 | 80 | 20 | -- | -- | 24 | 2812 |
| 4 | 75 | 25 | -- | -- | 22 | 3009 |
| 5 | 70 | 7.5 | 22.5 | 0.015 | 725 | 1646 |
| 6 | 70 | 10 | 20 | 0.02 | 649 | 1645 |
| 7 | 70 | 12.5 | 17.5 | 0.025 | 214 | 1660 |
| 8 | 70 | 15 | 15 | 0.03 | 114 | 1697 |
| 9 | 70 | 20 | 10 | 0.04 | 67 | 1814 |
| 10 | 70 | 22.5 | 7.5 | 0.045 | 216 | 1817 |

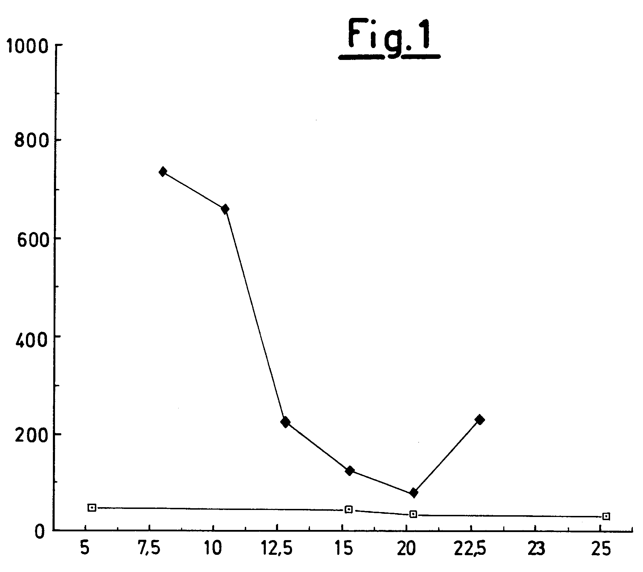

In order to better evaluate the improved mechanical characteristics of the compositions according to the present invention, in the accompanying Figure the IZOD impact strength values from Table IV, expressed as J/M, are reported in chart form, on the ordinate, as a function of HDPE content, expressed as % by weight (on the abscissa):

-- by the symbol "□", the points relevant to binary PET/HDPE compositions are marked (Comparison Examples 1-4);

-- by the symbol "♦", the points relevant to ternary PET/HDPE/elastomer, DCP-containing compositions are marked (Examples 5-10);

From a comparison of both charts, the better impact strength of the compositions according to the present invention clearly emerges.

**Claims**

1. Thermoplastic compositions comprising:
   (a) from 60 to 90% by weight, as referred to total polymeric components, of at least one aromatic polyester;
   (b) from 5 to 25% by weight, as referred to total polymeric components, of polyethylene;
   (c) from 5 to 35% by weight, as referred to total polymeric components, of at least one elastomeric copolymer constituted by 45% to 90%, by mol, of ethylene, 5-50%, by mol, of an alkyl acrylate or alkyl methacrylate in which the alkyl group contains from 1 to 8 carbon atoms, and from 0.3 to 5%, by mol, of an unsaturated epoxide;
   (d) from 0.01 to 2% by weight, relatively to the total weight of the composition, of a free-radical initiator;
   with the total of the percent content values of (a), (b) and (c) components being 100.

2. Thermoplastic compositions according to claim 1, in which the (a) component is present in amounts comprised within the range of from 60 to 80%, the (b) component is present in amounts comprised within the range of from 5 to 15%, the (c) component is present in amounts comprised within the range of from 15 to 30%, with said percentages being expressed as % by weight relatively to the total polymeric components, and the (d) component is present in amounts comprised within the range of from 0.01 to 0.5% by weight, relatively to the total weight of the composition.

3. Thermoplastic compositions according to claim 1, in which the (a) aromatic component is poly-(ethylene terephthalate).

4. Thermoplastic compositions according to claim 3, in which said poly-(ethylene terephthalate) has an inherent viscosity comprised within the range of from 0.6 to 0.8 dl/g, as measured at 25°C in chlorophenol.

5. Thermoplastic compositions according to claim 1, in which the (a) aromatic component is poly-(butylene terephthalate).

6. Thermoplastic compositions according to any of the preceding claims, in which the (b) component is a high-density polyethylene having a melt flow index (MFI) comprised within the range of from 10 to 30 g/10 minutes, as measured at 190°C under a load of 2.16 kg/cm$^2$.

7. Thermoplastic compositions according to any of the preceding claims, in which the (d) free-radical initiator has a dissociation constant at 80°C lower than $5 \times 10^{-5}$ seconds$^{-1}$.

8. Thermoplastic compositions according to claim 7, in which the (d) free-radical initiator is an organic peroxide, or a mixture of organic peroxides.

9. Thermoplastic compositions according to claim 8, in which the (d) free-radical initiator is selected from benzoyl peroxide, di-tert.-butyl peroxide, dicumyl-peroxide, tert.-butyl perbenzoate, tert.-butyl 2-ethylhexanoate, cumene hydroperoxide, or a mixture thereof.

10. Thermoplastic compositions according to any of the preceding claims, in which the (c) component is constituted by 70-85%, by mol, of ethylene, 10-25%, by mol, of an alkyl (meth)acrylate, in which the alkyl group is a $C_1$-$C_8$ alkyl, and 2-5%, by mol, of an unsaturated epoxide.

11. Thermoplastic compositions according to any of the preceding claims, in which, in the (c) component, the unsaturated epoxide is glycidyl methacrylate or glycidyl acrylate.

12. Thermoplastic compositions according to any of the preceding claims, in which, in the (c) component, the alkyl group contained in said alkyl (meth)acrylate is a $(C_1-C_4)$-alkyl.

13. Articles of manufacture obtained from the thermoplastic compositions according to the preceding claims.

## Fig.1